# EUROPÄISCHE PATENTSCHRIFT

(11) **EP 1 135 342 B1**
(45) Veröffentlichungstag und Bekanntmachung des Hinweises auf die Patenterteilung: **26.05.2004**
(21) Anmeldenummer: 00960402.6
(22) Anmeldetag: 08.08.2000
(51) Int. Cl.: C03B 5/02, C03B 5/225, C03B 5/44, C03B 7/07, H05B 6/22

(54) **VORRICHTUNG UND VERFAHREN ZUM ERSCHMELZEN ODER LÄUTERN VON GLÄSERN ODER GLASKERAMIKEN**
DEVICE AND METHOD FOR MELTING OR REFINING GLASS OR GLASS CERAMICS
DISPOSITIF ET PROCEDE PERMETTANT DE FAIRE FONDRE ET D'AFFINER DU VERRE OU DE LA VITROCERAMIQUE

(30) Priorität: 21.08.1999 DE 19939782
(43) Veröffentlichungstag der Anmeldung: 26.09.2001
(73) Patentinhaber: Schott Glas, 55122 Mainz (DE); CARL-ZEISS-STIFTUNG trading as SCHOTT GLAS, 55122 Mainz (DE)
(72) Erfinder: SCHMIDBAUER, Wolfgang, 55126 Mainz (DE); RÖMER, Hildegard, 61184 Karben (DE); RÄKE, Guido, 55411 Bingen (DE)
(74) Vertreter: Dr. Weitzel & Partner
(86) Internationale Anmeldenummer: PCT/EP2000/007650
(87) Internationale Veröffentlichungsnummer: WO 2001/014262

(56) Entgegenhaltungen:
- FR-A- 2 613 351
- FR-A- 2 768 257
- GB-A- 225 211
- US-A- 2 252 756
- PATENT ABSTRACTS OF JAPAN vol. 6, no. 180, 14. September 1982 (1982-09-14) -& JP 57 095834 A (NSG CO. LTD.), 14. Juni 1982 (1982-06-14) in der Anmeldung erwähnt

## Beschreibung

Die Erfindung betrifft eine Vorrichtung zum Erschmelzen oder Läutern von Gläsern oder Glaskeramiken.

Solche Vorrichtungen sind in Gestalt sogenannter Skulltiegel bekanntgeworden. Sie umfassen eine Tiegelwandung. Diese ist im allgemeinen zylindrisch. Sie ist aus einem Kranz von vertikalen Metallrohren aufgebaut. Zwischen einander benachbarten Rohren verbleiben Schlitze. Auch der Tiegelboden kann aus Metallrohren aufgebaut sein. Er kann aber auch aus Feuerfestmaterial bestehen. An ihren Enden sind sie an vertikale Rohre zur Kühlmittelzufuhr beziehungsweise Kühlmittelabfuhr angeschlossen.

Die Beheizung erfolgt durch eine Induktionsspule, die die Tiegelwandung umgibt, und über welche Hochfrequenzenergie in den Tiegelinhalt einkoppelbar ist.

Ein solcher Skulltiegel ist beispielsweise aus EP 0 528 025 B1 bekanntgeworden.

Ein Skulltiegel arbeitet wie folgt: der Tiegel wird mit Gemenge oder Scherben oder einem Gemisch hieraus befüllt. Das Glas, beziehungsweise die Schmelze müssen zunächst vorgeheizt werden, um eine gewisse Mindestleitfähigkeit zu erreichen. Das Vorheizen geschieht häufig durch Brennerbeheizung. Ist die Kopplungstemperatur erreicht, so kann die weitere Energiezufuhr über die Einstrahlung von Hochfrequenzenergie erfolgen. Auch während des Betriebes kann es in speziellen Fällen vorteilhaft sein, die Schmelze zusätzlich zu dem Beheizen mittels Hochfrequenzenergie durch Brenner zu beheizen, die auf die Schmelze von oben her einwirken, oder durch heiße Abgase. Insbesondere bei der Verwendung eines Skulltiegels zum Läutern ist dies notwendig. Ist nämlich die Oberflächenschicht kalt und entsprechend höher viskos, so werden Blasen daran gehindert, aus der Schmelze auszutreten oder es kommt zu Schaumbildung.

In der Regel ist der Skulltiegel stehend angeordnet. Er wird im allgemeinen diskontinuierlich betrieben.

JP 57-95834 A beschreibt eine Vorrichtung mit einer Quarzrinne, die horizontal angeordnet ist.

Der Quarzrinne ist ein Hochfrequenz-Schwingkreis zugeordnet, der eine zylindrische Spule umfaßt. Die zylindrische Spule umschlingt die Quarzrinne. Die Quarzrinne wird zwar gekühlt. Sie hat jedoch beim Schmelzen agressiver Gläser keine hohe Langzeitstabilität und keine hohe Bruchfestigkeit. Außerdem ist ein spezielles Beheizen der Schmelzoberfläche nicht möglich. Es entsteht sogar eine gewisse Kühlung, die zur Bildung einer zähen Haut im Oberflächenbereich führen kann. Soll eine solche Rinne als Läutervorrichtung verwendet werden, so können Blasen nicht mehr ungehindert aufsteigen und aus der Schmelze auftreten. Die Rinne ist somit zum Läutern nicht brauchbar. Wird die Rinne zum Schmelzen eingesetzt, und enthält die Schmelze leicht flüchtige Komponenten, so besteht die Gefahr der Kondensation am gekühlten Oberbau der Rinne. Das Kondensat kann dabei in unkontrollierter Weise in die Schmelze abtropfen. Dies kann zu Glasfehlern in Form von Knoten, Blasen oder Schlieren führen. Kommt es zu Korrosion des Spulenmateriales, so führt dies je nach Material der Spule auch zu Verfärbungen des Glases. Dies ist insbesondere bei optischen Gläsern nicht akzeptabel.

Weiterhin gibt es sehr viele optische Gläser, die einen hohen Anteil an Fluor, Phosphat oder anderen hochaggressiven Bestandteilen aufweisen. Auch diese können das Material der Spule angreifen. Die Korrosion kann derart stark sein, daß es zum Austritt von Kühlwasser kommt, so daß die Betriebssicherheit der Anlage nicht mehr gewährleistet ist.

Der Erfindung liegt die Aufgabe zugrunde, eine Vorrichtung zu schaffen, bei der die Vorzüge der Technik der induktiven Erwärmung genutzt werden, die betriebssicher ist, die sich auch zum Läutern von Schmelzen eignet, und die zu Gläsern einwandfreier Qualität führt.

Diese Aufgabe wird durch die Merkmale von Anspruch 1 gelöst.

Gemäß der Erfindung wird somit nicht nur von der Hochfrequenztechnik sondern auch von der Skull-Technik Gebrauch gemacht. Es wird eine Rinne verwendet, die einen Aufbau nach Art eines Skulltiegels hat. Der Oberraum ist hierbei nicht von wassergekühlten Rohren abgedeckt. Er ist vielmehr frei zugänglich, und zwar entweder zur thermischen Isolation oder für eine Zusatzbeheizung mittels eines Brenners oder mittels Strahlungswärme.

Die Erfindung bringt jedoch den weiteren folgenden Vorteil, den die Erfinder erkannt haben:
Verlaufen die wassergekühlten Metallrohre einer Skull-Vorrichtung in Glasflußrichtung, so kann es bei hohen Schmelztemperaturen, wenn die erstarrte, kalte Glasisolationsschicht sehr dünn wird, zu Überschlägen zwischen der Glasschmelze und den Metallrohren der Skullrinne kommen. Dies kann zu Lichtbögen zwischen der Skullrinne und der Schmelze führen, die eine Zerstörung des Skull-Gerippes zur Folge haben können. Dabei ist zu vermuten, daß die Lichtbogenbildung durch die in Skull-Rohre induzierte Hochfrequenzspannungen erzeugt wird.

Bei einer Ausbildung gemäß der Erfindung verlaufen die wassergekühlten, metallischen Skullrohre senkrecht zur Glasflußrichtung, somit nicht in Glasflußrichtung. Damit wird das Entstehen von Lichtbögen zwischen den Skull-Rohren und der Schmelze weitgehend vermieden.

In weiterer Ausgestaltung der Erfindung wird die Überschlagsneigung - d. h. die Neigung zum Bilden von Lichtbögen - dadurch vollends unterbunden, daß die Enden der U-Schenkel der Skull-Rohre zwecks Bildung einer Kurzschlußbrücke leitend miteinander verbunden werden.

Die Erfindung bringt die folgenden weiteren Vorteile:
Sie eignet sich hervorragend für den kontinuierlichen Betrieb. Sie kann somit sehr wirtschaftlich arbeiten.

Ein weiterer Vorteil besteht in folgendem:
Aufgrund der Gestaltung und Anordnung der Induktionsspulen als liegende Spulen ist die Rinne oben offen. Der Spiegel der Schmelze liegt frei. Die Oberfläche der Schmelze ist somit frei zugänglich für die Installation einer Zusatzheizung, beispielsweise eines Gasbrenners oder einer elektrischen Heizeinrichtung. Diese Oberhitze ist besonders vorteilhaft für den Fall, daß die Rinne als Läuteraggregat eingesetzt wird. Hierbei sind demgemäß hohe Oberflächentemperaturen erreichbar, so daß das Aufplatzen von Blasen im Bereich der Oberfläche sichergestellt wird.

Die Oberhitze ist außerdem hilfreich für den Fall des Ausfalls der Hochfrequenzenergie. Hierbei kann nämlich zumindest der Glastransport sichergestellt werden. Außerdem kann die Schmelztemperatur auf einem solchen Wert gehalten werden, daß nach erneutem Ingangsetzen der Hochfrequenzheizung ein Wiederankoppeln möglich ist.

Ferner besteht keine Gefahr der Kondensation von Verdampfungsprodukten an den wassergekühlten Spulenrohren, da sich diese nicht oberhalb des Spiegels der Schmelze befinden.

Weiterhin läßt sich bei der erfindungsgemäßen Skull-Rinne ein komplexer Oberbau vorsehen, umfassend keramische Platten, die die Rinne abdecken. Die keramischen Platten lassen sich mittels Brenner auf der Oberseite erhitzen. Die Platten strahlen sodann auf der Unterseite Wärme auf die Glasoberfläche, so daß das Glas indirekt beheizt wird. Dies hat den Vorteil, daß bei Gläsern mit stark zur Verdampfung neigenden Bestandteilen (B₂O₃, P₂O₅, F, S, Se, Te oder dergleichen) keine starken und turbulenten atmosphärischen Störungen unmittelbar unter dem Spiegel der Glasschmelze auftreten. Diese würden nämlich die leicht flüchtigen Komponenten mit sich fortreißen, was zu einer Veränderung der Glaszusammensetzung führen müßte. Auch wird hierdurch ein vorzeitiges Verstopfen von Filteranlagen vermieden.

Ein weiterer Vorteil der erfindungsgemäßen Skullrinne liegt darin, daß bei Zusatzbeheizung mittels Brenner - mit oder ohne keramischer Abdeckung - eine reduzierende Atmosphäre eingestellt werden kann. Diese ist zur Herstellung von Wärmeschutzgläsern oder hoch-UV-durchlässigen Gläsern notwendig, bei denen es darauf ankommt, daß das Fe³⁺/Fe²⁺-Verhältnis möglichst weitgehend zur reduzierten Form verschoben ist. Fe²⁺ absorbiert im IR, also die Wärmestrahlung (Wärmeschutzglas), während Fe³⁺ im UV absorbiert, also bei hoch-UV-durchlässigen Gläsern weitestgehend vermieden werden muß. Da es sich bei den Gläsern oft um Phosphat- bzw. Fluorphosphatgläser handelt, ist die Verwendung einer keramischen Abdeckplatte sinnvoll. Eine ähnliche Argumentation gilt bei der Produktion von Anlaufgläsern, bei denen es darauf ankommt, daß die für die Färbung notwendigen Chalkogenide zumindest teilweise in der reduzierten Form (S²⁻, Se²⁻, Te²⁻) vorliegen. Auch hier ist es vorteilhaft, die Verdampfung in diesem Fall der Farbkomponenten, durch Verwendung keramischer Abdeckplatten zu minimieren.

Reduzierende Bedingungen können auch bei Verwendung einer Elektrooberhitze mittels entsprechender reduzierender Gase oder Gasmischungen (Formiergas, H₂, CO/CO₂ und weiterer) eingestellt werden, jedoch ist die Verwendung eines reduzierend eingestellten Brenners (unvollständige Gasverbrennung, d. h. Luft/Sauerstoffunterschuß) im allgemeinen kostengünstiger.

Die beschriebenen Rinnensysteme können an konventionell beheizte Platinoder Steinrinnen angeflanscht werden. Beim Anschluß an eine Steinrinne ist die Kühlung des Steinrinnen-Skull-Übergangs wichtig. Im Betrieb genügt in der Regel eine gute Kontaktierung der wassergekühlten Rinne mit dem Steinmaterial. Während der Phase des Aufheizens muß die Bewegungsfreiheit der Steinrinne relativ zu HF-Rinne sichergestellt sein, da die Steinrinne sich beim Auftempem ausdehnt, während die wassergekühlte HF-Rinne ihre Geometrie beibehält. Am besten bewährt hat sich das Vorgehen, die Steinrinne erst nach dem Antempern an die HF-Rinne heranzufahren und im heißen Zustand zu fixieren.

Bei der Kontaktierung einer HF-Rinne mit einer elektrisch beheizten Platinrinne muß sichergestellt sein, daß entweder keinerlei elektrischer Kontakt zwischen den metallischen Bauteilen der HF-Rinne oder aber ein sehr guter elektrischer Kontakt besteht. Der letzte Fall birgt die Gefahr, daß HF-Störsignale über das Platinsystem ausgekoppelt werden, ist aber dem schlechten Kontakt, der mit Funkenbildung an Stellen mit erhöhtem Widerstand einhergeht, vorzuziehen.

Eine vollkommene elektrische Trennung zwischen Skull-Rinne und Platinrinne kann erreicht werden durch keramische Zwischenstücke, die einen Abstand von mindestens 5 mm zwischen den metallischen Bauteilen gewährleisten müssen. Größere Abstände bieten mehr Sicherheit bezüglich der elektrischen Durchschlagsfestigkeit, sind aber insbesondere bei aggressiven Schmelzen schwerer zu dichten. Als Isolationsmaterial erwies sich eine Quarzkeramik als am geeignetsten.

Hat die Rinne eine Länge von mehr als 1200 mm, so muß sie mit mehreren Flachspulen beheizt werden, wobei die Flachspulen idealerweise von verschiedenen HF-Generatoren mit Energie versorgt werden, um die Temperatur in den einzelnen Rinnenbereich unabhängig voneinander einstellen zu können. Der Abstand x der benachbarten Flachspulen sollte größer oder mindestens gleich der Höhe der Spulenwicklung d sein, damit die HF-Felder sich nicht gegenseitig beeinflussen.

Im Übergangsbereich zwischen zwei Flachspulen liegt ein nicht beheizter oder nur sehr schwach beheizter Bereich, da die beiden Flachspulen nicht beliebig nahe aneinander geführt werden können. In dieser Zone kühlt die Schmelze ab. Ein Auf- und Abheizen einer Glasschmelze ist für die Glasqualität insbesondere auch aufgrund der Gefahr des thermischen Reboil unerwünscht. Um ein glattes Temperaturprofil oder ein monoton steigendes oder monoton fallendes Temperaturprofil über die gesamte Rinnenlänge sicherzustellen, muß eine Zusatzheizung im Bereich zwischen zwei Spulenübergängen installiert werden. Es kann bei dem hier beschriebenen Rinnentyp entweder eine Elektrozusatzheizung (z. B. SiC-Stäbe oder Kanthalnadeln) oder eine Gasbefeuerung eingesetzt werden. Im Falle der Gasbefeuerung erweist sich die Verwendung der Flachspule mit Spulenführung nur unterhalb der Rinne als vorteilhaft.

Die Erfindung ist anhand der Zeichnung näher erläutert. Darin ist im einzelnen folgendes dargestellt:
- Figur 1: ist eine Draufsicht auf eine Induktionsspule bei einer erfindungsgemäßen Vorrichtung.
- Figur 2: ist eine 3D-Ansicht einer Induktionsspule, die in einer Ebene leicht gewölbt ist.
- Figur 3: ist eine 3D-Ansicht von zwei Spulen, die in einer Ebene leicht gewölbt sind.
- Figur 4: zeigt eine käfigartige Skull-Rinne.
- Figur 5: veranschaulicht schematisch eine Skull-Rinne mit mehreren, in Serie geschalteten Flachspulen.
- Figur 6: zeigt eine Skull-Rinne in einem zur Glasflußrichtung senkrechten Schnitt mit zugehörender Induktionsspule und Brenner.
- Figur 7: zeigt einen ähnlichen Gegenstand wie Figur 6, jedoch mit Elektro-Zusatzheizung.

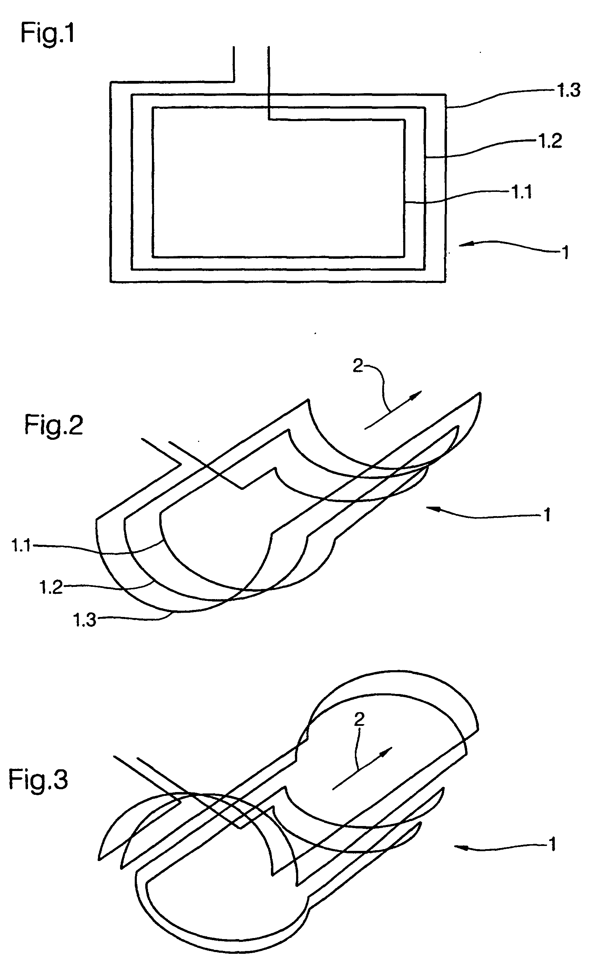

Die in Figur 1 gezeigte Spule 1 weist schneckenförmig verlaufende Windungen 1.1, 1.2, 1.3 auf. Die Windungen liegen im vorliegenden Falle in einer Horizontalebene, genau wie die Glasflußrichtung 2 - siehe Figur 2. Das lichte Maß der inneren Windung in Glasflußrichtung 2 ist relativ groß. Es kann ein mehrfaches der lichten Weite senkrecht zur Glasflußrichtung 2 betragen.

Auch die in Figur 2 gezeigte Spule 1 ist schneckenförmig und umfaßt die Windungen 1.1, 1.2, 1.3. Es versteht sich, daß auch eine viel größere Zahl von Windungen möglich ist. Diese Spule ist in einer Ebene leicht gekrümmt. Die in Richtung des Glasflusses 2 verlaufenden Windungsabschnitte liegen beidseits der hier nicht dargestellten Rinne.

Bei der in Figur 3 dargestellten Spule sind die Windungen unterteilt. Man erkennt wiederum Windungsabschnitte, die parallel zur Glasflußrichtung geradlinig verlaufen. Die gekrümmten Windungsabschnitte liegen am Anfang und am Ende der Rinne. Sie verlaufen bei der einen Hälfte der Windungen unterhalb, und bei der anderen Hälfte der Windungen oberhalb der nicht dargestellten Rinne. Dadurch wird folgendes erreicht: diejenigen, in den Skull-Rohren induzierten Hochfrequenzspannungen, die durch die gekrümmten Spulenabschnitte erzeugt werden, werden durch den gegenläufigen Umlauf der gekrümmten Windungsabschnitte weitgehend aufgehoben.

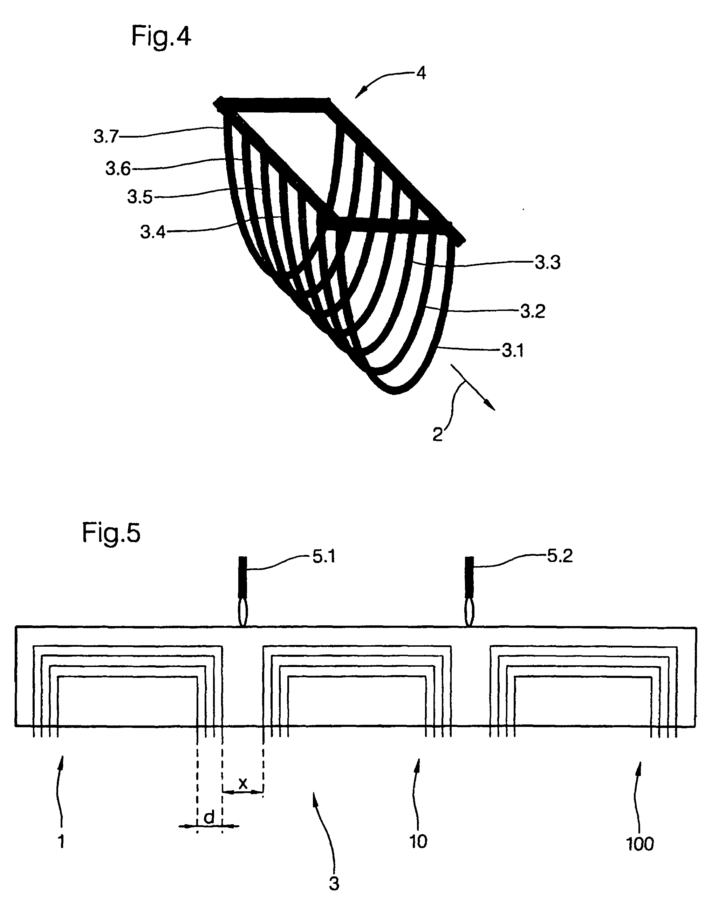

Figur 4 zeigt die Skull-Rinne 3. Sie umfaßt eine Mehrzahl von U-förmigen Skull-Rohren 3.1 - 3.7. Die Skull-Rohre liegen in zueinander parallelen Ebenen. Statt einer reinen U-Form sind auch Abweichungen denkbar, beispielsweise einer angenäherten V-Form. Die Skull-Rohre sind - wie bei Skufltiegeln - wassergekühlte Metallrohre.

An den freien Enden der U-Elemente sind Leiter 4 vorgesehen, die die freien Enden der U-Elemente miteinander kurzschließen. Auch diese Kurzschlußleitungen 4 sind luft- oder wassergekühlt.

Im vorliegenden Falle verlaufen die U-Elemente in Ebenen, die senkrecht zu der Glasflußrichtung 2 liegen. Es wäre aber auch denkbar, die U-Elemente in hierzu geneigten Ebenen anzuordnen.

Figur 4 macht deutlich, daß der von den Kurzschlußleitem 4 umschlossene Raum nach oben offen ist. Die Schmelze ist somit von oben her zugänglich, ausgenommen die Kurzschlußzonen am Rinneneingang und am Rinnenausgang. Es gibt somit oberhalb der Schmelze keine wassergekühlten Bauteile und damit auch keine Gefahr der Kondensation von Verdampfungsprodukten mit den eingangs geschilderten Nachteilen. Außerdem lassen sich über der Schmelze Gasbrenner oder sonstige Zusatz-Heizeinrichtungen anordnen. Die Oberhitze ist vorteilhaft für den Fall, daß die Rinne als Läuteraggregat eingesetzt wird. Dies kann notwendig sein, um den Oberflächenbereich der Schmelze auf besonders hohe Temperaturen zu bringen, damit das Aufplatzen von Blasen und das Austreten von Gas aus der Schmelze sichergestellt wird.

Figur 5 zeigt eine verhältnismäßig lange Skull-Rinne 3. Dieser Rinne 3 sind mehrere Flachspulen 1, 10, 100, zugeordnet. Außerdem sind Zusatz-Heizeinrichtungen 5.1, 5.2 vorgesehen. Die Zusatz-Heizeinrichtungen liegen jeweils im Übergangsbereich zwischen zwei Flachspulen.

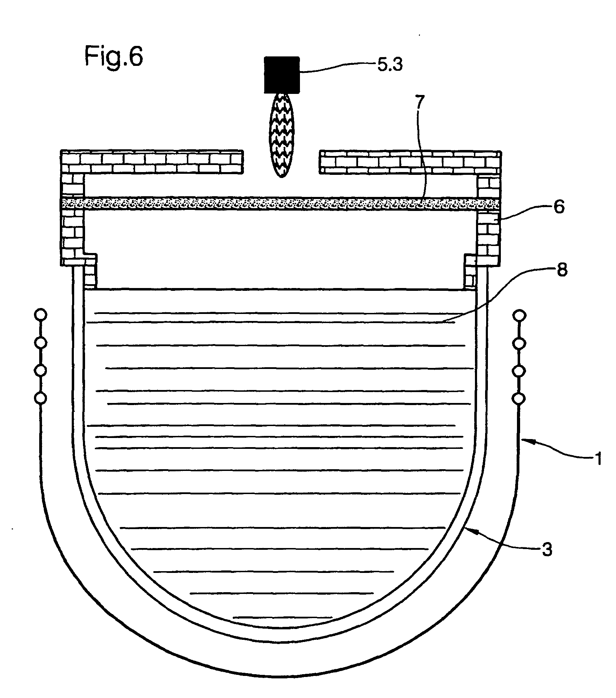

Figur 6 zeigt eine erfindungsgemäße Vorrichtung in einem zur Richtung des Glasflusses senkrechten Schnitt. Die Skull-Rinne 3, so wie in Figur 4 gezeigt, ist von Schmelze 8 durchflossen. Dabei bewegt sich der Schmelzfluß außerordentlich langsam. Die Skull-Rinne ist von einer Induktionsspule 1 umgeben. Diese kann die Konfiguration der in den Figuren 1 - 3 gezeigten Spulen aufweisen.

Der Oberofenraum ist aus einem Aufbau 6 aus Feuerfestmaterial gebildet. Dabei ist eine Brenner-Zusatzheizung 5.3 vorgesehen. Diese kann entweder unmittelbar Wärme auf die Schmelzoberfläche übertragen. Die Übertragung kann jedoch auch indirekt geschehen. Es kann nämlich - so wie hier dargestellt - eine keramische Platte 7 vorgesehen werden, die von der Brenner-Zusatzheizung aufgeheizt wird und sodann Wärme gleichmäßig verteilt der Schmelzoberfläche zuführt.

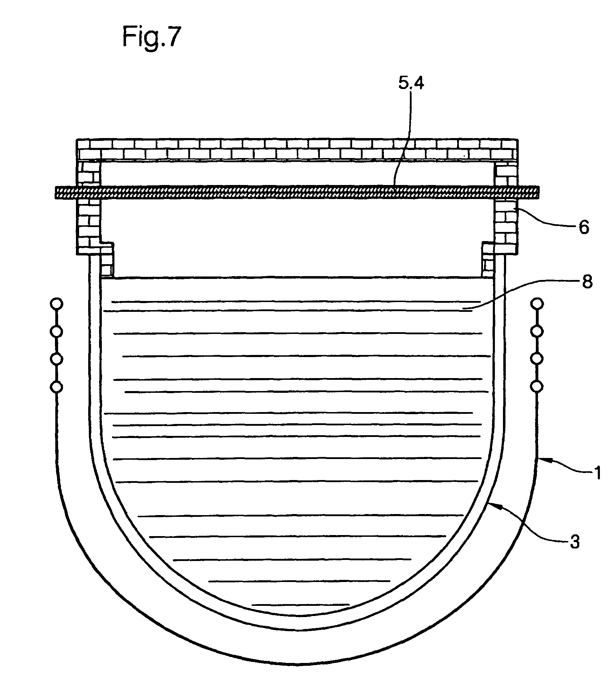

Bei der Ausführungsform gemäß Figur 7 ist statt einer keramischen Platte 7 eine Elektro-Zusatzheizung 5.4 vorgesehen, die die Schmelzoberfläche aufheizt.

Die Spule hat eine möglichst große Mittelöffnung. Die Spule verläuft rechts und links der Rinne parallel zum Glasfluß und am Ende der Rinne unterhalb der Rinne auf die gegenüberliegende Rinnenseite. Idealerweise verlaufen die eine Hälfte der Windungen unterhalb und die andere Hälfte der Windungen oberhalb der Rinne auf die gegenüberliegende Seite. Damit wird erreicht, daß sich die durch diese Spulenstücke in den Skull-U-Rohren induzierten HF-Spannungen durch den gegenläufigen Umlauf weitgehend aufheben. Im Bereich der Spulenrückführung auf die gegenüberliegende Rinnenseite ist die Skullrinne am oberen Ende von der einen zur anderen Rinnenseite kurzgeschlossen. Der Kurzschluß ist luft- oder wassergekühlt.

Die Skullrinne umfaßt vorzugsweise eine Reihe von U-Segmenten, die am oberen Ende einen Kreiskurzschluß haben. Die Spule ist in Projektion von oben eine schneckenförmig gewickelte rechteckig verdrückte Flachspule, deren schmale Seiten oberhalb und bzw. oder unterhalb der Rinne herumgeführt werden. Werden Spulenstücke oberhalb der Rinne entlang geführt, so ist zwischen Schmelze und Spule eine keramische Isolation, z. B. in Form einer Quarzgutbrücke anzubringen.

Der Aufbau hat den Vorteil gegenüber liegenden Zylinderrinnen mit Zylinderspulen, daß im oberen Bereich der Schmelze, mit Ausnahme der Kurzschlußzonen am Rinneneingang und Ausgang, keine wassergekühlten Bauteile vorhanden ist, so daß die Schmelze hier heißer ist und keine Gefahr der Kondensation von Verdampfungsprodukten besteht. Zudem ist der Bereich oberhalb der Schmelze frei zugänglich zur Installation einer Gas- oder Elektrooberhitze. Diese Oberhitze ist vorteilhaft für den Fall, daß die Rinne als Läuteraggregat eingesetzt wird, da hiermit höhere Oberflächentemperaturen erreichbar sind und damit das Aufplatzen von Blasen sichergestellt werden kann. Die Oberhitze ist außerdem hilfreich für den Fall des Ausfalls der Hochfrequenzenergie, da in diesem Fall zumindest der Glastransport sichergestellt werden kann und das Wiederankoppeln nach Ausfall der Hochfrequenzheizung erleichtert wird.

Außerdem ist der beschriebene Aufbau vorteilhaft zum Anbringen eines komplexen Oberbaus, bestehend aus keramischen Platten, die die Rinne abdecken, in denen das Glas fließt. Diese keramischen Platten werden durch die Brenner mit der Oberseite erhitzt und strahlen ihrerseits mit ihrer Unterseite auf die Glasoberfläche, so daß das Glas indirekt beheizt wird. Dies hat den Vorteil, daß bei Gläsern mit stark zur Verdampfung neigenden Komponenten, wie beispielsweise B₂O₃, P₂O₅, F, S, Se, Te und weiteren keine starken und turbulenten atmosphärischen Strömungen direkt oberhalb der Glasschmelze auftreten, die die leichtflüchtigen Komponenten mit sich fortreißen und somit zu einer Veränderung der Glaszusammensetzung führen. Auch wird hierdurch ein vorzeitiges Verstopfen von Filteranlagen vermieden.

Ein weiterer Vorteil des gewählten Aufbaus ist, daß bei einer Zusatzbeheizung mittels Brenner, ob mit oder ohne keramischer Abdeckplatten, eine reduzierende Atmosphäre eingestellt werden kann. Diese ist zur Herstellung von Wärmeschutzgläsern oder hoch UV-durchlässigen Gläsern nötig, bei denen es darauf ankommt, daß das Fe³⁺/Fe²⁺-Verhältnis möglichst weitgehend zur reduzierten Form verschoben ist. Fe²⁺ absorbiert im IR, also die Wärmestrahlung (Wärmeschutzglas), während Fe³⁺ im UV absorbiert, also bei hoch UV-durchlässigen Gläsern weitestgehend vermieden werden muß. Da es sich bei den Gläsern oft um Phosphat- bzw. Fluorphosphatgläser handelt, ist die Verwendung einer keramischen Abdeckplatte sinnvoll. Eine ähnliche Argumentation gilt bei der Produktion von Anlaufgläsern, bei denen es darauf ankommt, daß die für die Färbung notwendigen Chalkogenide zumindest teilweise in der reduzierten Form (S²⁻, Se²⁻, Te²⁻) vorliegen. Auch hier ist es vorteilhaft, die Verdampfung, in diesem Fall der Farbkomponenten, durch Verwendung keramischer Abdeckplatten zu minimieren.

## Patentansprüche

1. Vorrichtung für das Erschmelzen oder Läutern von Gläsern oder Glaskeramiken;
1.1 mit einer Mehrzahl von Rohren (3.1 - 3.7), die U-förmig sind und nebeneinander liegen, so daß sie eine nach oben offene, käfigartige Skull-Rinne (3) bilden;
1.2 die Rohre (3.1 - 3.7) sind an ein Kühlmedium anschließbar;
1.3 es ist ein Hochfrequenz-Schwingkreis vorgesehen, umfassend eine Induktionsspule (1);
1.4 die Induktionsspule (1) umschlingt die Rinne (3) derart, daß sich Windungsabschnitte entlang der Seitenwände der Rinne (3) erstrecken.

2. Vorrichtung nach Anspruch 1, **dadurch gekennzeichnet, daß** die Enden der U-Schenkel zwecks Bildung einer Kurzschlußbrücke leitend miteinander verbunden sind.

3. Vorrichtung nach Anspruch 1 oder 2, **dadurch gekennzeichnet, daß** die Rinne (3) im Oberofenraum thermisch isoliert ist.

4. Vorrichtung nach einem der Ansprüche 1 - 3, **dadurch gekennzeichnet, daß** im Oberofenraum eine Zusatzheizung (5.1 - 5.4) vorgesehen ist.

5. Vorrichtung nach Anspruch 4, **dadurch gekennzeichnet, daß** die Zusatzheizung (5.1, 5.4) derart gestaltet und angeordnet ist, daß sie unmittelbar auf die Oberfläche der Schmelze (8) einwirkt.

6. Vorrichtung nach Anspruch 4, **dadurch gekennzeichnet, daß** zwischen der Zusatz-Heizeinrichtung (5.3) und der Oberfläche der Schmelze (8) eine keramische Platte (7) vorgesehen ist, die von der Zusatz-Heizeinrichtung (5.3) aufgeheizt wird und die Wärme an die Oberfläche der Schmelze (8) abgibt.

7. Vorrichtung nach einem der Ansprüche 1 - 6, **dadurch gekennzeichnet, daß** der Rinne (3) mehrere, hintereinander geschaltete Flachspulen (1, 10, 100) zugeordnet sind.

8. Vorrichtung nach Anspruch 7, **dadurch gekennzeichnet, daß** zwischen den einzelnen Spulenübergängen jeweils eine Zusatzheizeinrichtung (5.1, 5.2) vorgesehen ist.

9. Verfahren für das Schmelzen und das Läutern von Gläsern oder Glaskeramiken, insbesondere Glas, unter Verwendung einer Vorrichtung gemäß einem der Ansprüche 4 bis 8, **dadurch gekennzeichnet, daß** das Gas/Luft- oder Gas/Sauerstoffverhältnis der Brenner reduzierend eingestellt sind, so daß das Redoxverhältnis polyvalenter lonen auf der reduzierten Seite liegt.

10. Verfahren nach Anspruch 8 oder 9, **dadurch gekennzeichnet, daß** insbesondere das Fe³⁺/Fe²⁺-Verhältnis weitgehend zur reduzierten Form (Fe²⁺) verschoben ist.

11. Verfahren nach Anspruch 9 oder 10, **dadurch gekennzeichnet, daß** es sich bei dem verwendeten Glas um ein Phosphat- oder Fluorphosphatglas handelt.

12. Verfahren nach einem der Ansprüche 9 bis 11, **dadurch gekennzeichnet, daß** insbesondere das SO₄²⁻/S²⁻, das SeO₃²⁻/Se²⁻ und/oder das TeO₃²⁻/Te²⁻-Verhältnis zur reduzierten Form (S²⁻, Se²⁻, Te²⁻) verschoben ist.

13. Verfahren nach einem der Ansprüche 9 bis 12, **dadurch gekennzeichnet, daß** es sich bei dem Glas um ein Alkali-(Erdalkali)Zink-(Boro-)Silikatglas handelt.

14. Verfahren nach einem der Ansprüche 9 bis 13, **dadurch gekennzeichnet, daß** die reduzierenden Bedingungen nicht durch einen Brenner, sondern durch reduzierende Gase oder Gasmischungen wie Formiergas, H₂, CO, CO₂ und weitere eingestellt werden.

## Claims

1. An apparatus for melting or refining glass or glass ceramics;
1.1 with a plurality of tubes (3.1 to 3.7) which are U-shaped and are situated next to one another, so that they form an upwardly open, cage-like skull groove (3);
1.2 with the tubes (3.1 to 3.7) being connectable to a cooling medium;
1.3 with a high-frequency oscillation circuit being provided which comprises an induction coil (1);
1.4 with the induction coil (1) enclosing the groove (3) in such a way that the winding sections extend along the side walls of the groove (3).

2. An apparatus as claimed in claim 1, **characterized in that** the ends of the U-legs are conductively connected with each other for the purpose of forming a short-circuit bridge.

3. An apparatus as claimed in claim 1 or 2, **characterized in that** the groove (3) is thermally insulated in the upper furnace space.

4. An apparatus as claimed in one of the claims 1 to 3, **characterized in that** an additional heating (5.1 to 5.4) is provided in the upper furnace space.

5. An apparatus as claimed in claim 4, **characterized in that** the additional heating (5.1, 5.4) is arranged and configured in such a way that it acts directly upon the surface of the melt (8).

6. An apparatus as claimed in claim 4, **characterized in that** a ceramic plate (7) is provided between the additional heating device (5.3) and the surface of the melt (8), which ceramic plate is heated up by the heating device (5.3) and emits the heat to the surface of the melt (8).

7. An apparatus as claimed in one of the claims 1 to 6, **characterized in that** the groove (3) is associated with several, successively switched flat coils (1, 10, 100).

8. An apparatus as claimed in claim 7, **characterized in that** an additional heating device (5.1, 5.2) is provided between the individual transitions between the coils.

9. A method for the melting and refining of glass or glass ceramics, especially glass, by using an apparatus according to one of the claims 4 to 8, **characterized in that** the gas-to-air or gas-to-oxygen ratio of the burners are set in a reducing manner, so that the redox ratio of polyvalent ions lies on the reducing side.

10. A method as claimed in claim 8 or 9, **characterized in that** especially the Fe³⁺/Fe²⁺ ratio is displaced substantially to the reduced form (Fe²⁺).

11. A method as claimed in claim 9 or 10, **characterized in that** the glass used concerns a phosphate or fluorophosphates glass.

12. A method as claimed in one of the claims 9 to 11, **characterized in that** especially the SO₄²⁻/ S²⁻, SO₃²⁻/ S²⁻ and/or TeO₃²⁻/ Te²⁻ ratio is displaced to the reduced form (S²⁻, Se²⁻, Te²⁻).

13. A method as claimed in one of the claims 9 to 12, **characterized in that** the glass concerns an alkali (alkaline-earth) zinc (boro-) silicate glass.

14. Method as claimed in one of the claims 9 to 13, **characterized in that** the reducing conditions are not set by a burner but instead by reducing gases or gas mixtures such as forming gas, H₂, CO, CO₂ and the like.

## Revendications

1. Dispositif pour la fusion ou la purification de verres ou de vitrocéramiques ;
1.1 avec une pluralité de tubes (3.1-3.7) en forme de U juxtaposés de manière à former un chenal à croûte refroidie (3) en forme de cage ouverte vers le haut ;
1.2 les tubes (3.1-3.7) peuvent être raccordés à un fluide de refroidissement ;
1.3 il est prévu un circuit oscillant à haute fréquence comprenant une bobine à induction (1) ;
1.4 la bobine à induction (1) entoure le chenal (3) de telle manière que des parties de l'enroulement s'étendent le long des parois latérales du chenal (3).

2. Dispositif selon la revendication 1, **caractérisé en ce que** les extrémités des bras du U sont reliés entre eux de manière conductrice pour produire un pontage de court-circuit.

3. Dispositif selon la revendication 1 ou 2, **caractérisé en ce que** le chenal est isolé thermiquement dans le volume supérieur du four.

4. Dispositif selon l'une quelconque des revendications 1 à 3, **caractérisé en ce qu'**il est prévu dans le volume supérieur du four un chauffage supplémentaire (5.1-5.4).

5. Dispositif selon la revendication 4, **caractérisé en ce que** le chauffage supplémentaire (5.1, 5.4) est conçu et disposé de telle manière qu'il agisse directement sur la surface de la matière en fusion (8).

6. Dispositif selon la revendication 4, **caractérisé en ce qu'**il est prévu entre le dispositif de chauffage supplémentaire (5.3) et la surface de la masse en fusion (8) une plaque de céramique (7) qui est chauffée par le dispositif de chauffage supplémentaire (5.3) et transmet la chaleur à la surface de la masse en fusion (8).

7. Dispositif selon l'une quelconque des revendications 1 à 6, **caractérisé en ce que** le chenal (3) est associé à plusieurs bobines plates (1, 10, 100) montées les unes derrière les autres.

8. Dispositif selon la revendication 7, **caractérisé en ce qu'**il est prévu à chaque transition entre les bobines un dispositif de chauffage supplémentaire (5.1, 5.2).

9. Procédé pour la fusion et la purification de verres ou de vitrocéramiques, en particulier de verre, utilisant un dispositif selon l'une quelconque des revendications 4 à 8, **caractérisé en ce que** le rapport gaz-air ou gaz-oxygène des brûleurs est réglé de manière à obtenir un effet réducteur, de telle sorte que le rapport d'oxydation-réduction des ions polyvalents se trouve du côté réducteur.

10. Procédé selon la revendication 8 ou 9, **caractérisé en ce que** le rapport Fe³⁺/Fe²⁺, en particulier, est très décalé vers la forme réduite (Fe²⁺).

11. Procédé selon la revendication 9 ou 10, **caractérisé en ce que** le verre utilisé est un verre au phosphate ou au fluorophosphate.

12. Procédé selon l'une quelconque des revendications 9 à 11, **caractérisé en ce que** le rapport SO₄²⁻/S²⁻, le rapport SeO₃²⁻/Se²⁻ et/ou le rapport TeO₃²⁻ /Te²⁻, en particulier, sont décalés vers la forme réduite (S²⁻, Se²⁻, Te²⁻).

13. Procédé selon l'une quelconque des revendications 9 à 12, **caractérisé en ce que** le verre est un verre alcalin (alcalinoterreux) au zinc et (boro)silicate.

14. Procédé selon l'une quelconque des revendications 9 à 13, **caractérisé en ce que** les conditions réductrices sont ajustées non pas par un brûleur mais par des gaz ou mélanges gazeux réducteurs tels que du gaz de formation, du H₂, du CO, du CO₂ et autres.
